Europäisches Patentamt

European Patent Office

Office européen des brevets

(11) Numéro de publication: **0 091 338**
**B1**

(12) **FASCICULE DE BREVET EUROPEEN**

(45) Date de publication du fascicule du brevet: **07.01.87**

(51) Int. Cl.⁴: **H 04 Q 11/04**

(21) Numéro de dépôt: **83400590.2**

(22) Date de dépôt: **22.03.83**

(54) Central téléphonique numérique modulaire étendu.

(30) Priorité: **30.03.82 FR 8205434**

(43) Date de publication de la demande:
**12.10.83 Bulletin 83/41**

(45) Mention de la délivrance du brevet:
**07.01.87 Bulletin 87/02**

(84) Etats contractants désignés:
**DE GB IT NL**

(56) Documents cités:
**GB-A-2 061 063**

**INTERNATIONAL SWITCHING SYMPOSIUM,
Montréal, 21-25 septembre 1981, pages 1-6,
session 34A, CA. P.CHARRANSOL et al.:
"Structure of a time division switching system
for distributed control and linear growth
capability"**

**INTERNATIONAL SWITCHING SYMPOSIUM,
7-11 mai 1979, pages 319-323, Paris, FR., P.
CHARRANSOL et al.: "Presentation and general
principles of the MT time division system"**

**INTERNATIONAL SWITCHING SYMPOSIUM,
Montréal, 21-25 septembre 1981, pages 1-7,
session 32A, CA. S. DAL MONTE et al.: "Proteo
system - UT 10/3: a combined local and toll
exchange"**

(73) Titulaire: **THOMSON-CSF TELEPHONE
146, Boulevard de Valmy
F-92707 Colombes (FR)**

(72) Inventeur: **Charransol, Pierre
THOMSON-CSF SCPI 173, bld Haussmann
F-75379 Paris Cedex 08 (FR)**
Inventeur: **Athenes, Claude
THOMSON-CSF SCPI 173, bld Haussmann
F-75379 Paris Cedex 08 (FR)**
Inventeur: **Boussus, Yves
THOMSON-CSF SCPI 173, bld Haussmann
F-75379 Paris Cedex 08 (FR)**

(74) Mandataire: **Weinmiller, Jürgen et al
Lennéstrasse 9
D-8133 Feldafing (DE)**

(56) References cited:

**ELECTRICAL COMMUNICATION, vol. 56, no.
2/3, 1981, pages 264-273, New York, USA, B.
ROSSI et al.: "ITT 1240 digital exchange
implementation of CCITT no. 7 common
channel signaling"**

**INTERNATIONAL SWITCHING SYMPOSIUM,
Montreal, 21-25 septembre 1981, pages 1-9,
session 14A, CA. M. BALLARD et al.: "The
E10.S-TSS.5: a multipurpose digital switching
system"**

Courier Press, Leamington Spa, England.

EP 0 091 338 B1

## Description

La présente invention se rapporte à un central téléphonique numérique modulaire étendu.

Pour qu'un central téléphonique numérique puisse être facilement adapté à tous les cas d'utilisation, avec le minimum possible de modifications, il doit être modulaire. Les modules constituant ce central doivent être relativement petits et pratíquement tous identiques.

On connaît d'après le brevet français 79 10 805 et le brevet français 79 10 491 les éléments principaux des modules ou baies constituant un tel central téléphonique, et on connaît d'après la communication de MM. HAURI, ATHENES, SALLE et RAILLARD à l'ISS 1979, et la communication de MM. ATHENES et AUDRIX à l'ISS 1981 les circuit intégrés spécifiques permettant de réaliser à faible coût ce central téléphonique. Chacune des baies de ce central est autonome et peut constituer un petit central téléphonique. Ce central téléphonique connu ne comporte pas des réseau de connexion centralisé comme c'est généralement le cas pour les autres centraux numériques connus, mais un réseau de connexion réparti entre toutes les baies. La capacité de ce central téléphonique est limitée à environ 800 lignes.

On connaît également par l'article de P. CHARRANSOL et al: "Présentation et principes généraux de la game des centraux temporels MT", INTERNATIONAL SWITCHING SYMPOSIUM, 7—11 mai 1979, pages 319—323, des baies reliées entre elles par des jonctions MIC, et un central comportant des unités d'adaptation, une unité de signalisation, une unité de connexion et un réseau de connexion du type TST replié divisé en deux branches indépendantes; chaque branche comporte un groupe de jonctions temporelles et un circuit de sélection de groupe. Le choix entre les deux branches est effectué par un circuit de sélection de branche de l'unité de connexion, et la sélection de groupe ne peut se faire qu'entre des jonctions temporelles d'un groupe de jonctions temporelles d'une branche.

La présente invention a pour but un central téléphonique numérique modulaire dont la capacité puisse être facilement et graduellement étendue jusqu'à 64 000 lignes environ, et ce, un utilisant au maximum des circuit existants.

Ce but est atteint selon l'invention par le central téléphonique numérique modulaire tel que caractérisé dans la revendication 1.

En ce qui concerne des perfectionnements de l'invention, référence est faite aux sous-revendications.

La présente invention sera mieux comprise à la lecture de la description détaillée d'un mode de réalisation pris comme exemple non limitatif et illustré par le dessin annexé sur lequel:

— la figure 1 est un bloc-diagramme simplifié d'une baie, connue en soi, faisant partie du central de l'invention;

— la figure 2 est le bloc-diagramme d'un groupe de baies reliées en point à point conformément à l'invention;

— la figure 3 est le bloc-diagramme simplifié d'un central téléphonique conforme à l'invention;

— la figure 4 est un bloc-diagramme fonctionnel du cheminement de la signalisation dans une baie de commutation de signalisation du central de la figure 2;

— la figure 5 est un bloc-diagramme détaillé d'une matrice de connexion utilisée dans l'alvéole de commutation de signalisation et de parole de l'invention;

— la figure 6 est un bloc-diagramme simplifié de l'alvéole de commutation de signalisation et de parole de l'invention;

— la figure 7 est un bloc-diagramme simplifié d'une partie d'une baie de commutation de signalisation et de parole du central de la figure 2.

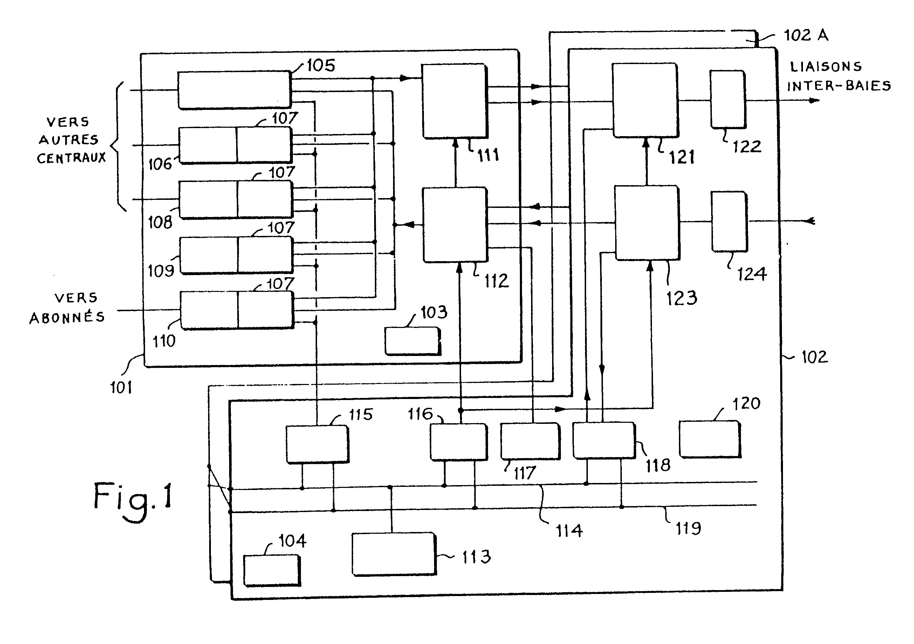

On a représenté, pour mémoire, sur la figure 1 le bloc-diagramme d'une baie quelconque faisant partie du central téléphonique de l'invention. Cette baie connue comporte deux sortes principales d'alvéoles: les alvéoles d'unités terminales (101), qui sont au nombre de six au maximum, et deux demi-alvéoles d'unité de traitement 102 et 102A. Chaque alvéole comporte sont propre circuit d'alimentation en énergie référence 103 pour les alvéoles 101 et 104 pour le demi-alvéole 102.

Les alvéoles 101 comportent chacun: un joncteur MIC avec ses circuits de synchronisation référencé 105, un joncteur 64 kbits/s 106 suivi d'un circuit à codec et filtre 107 (par exemple le circuit intégré MOSTEK MK 5316 actuellement disponible), un joncteur basse fréquence 108 également suivi du circuit 107, un circuit émetteur-récepteur multifréquence 109 également suivi du circuit 107, un circuit terminal d'abonnés 110 également suivi du circuit 107. D'une part les circuits 105, d'autre part les circuits 106 et 108 avec leurs circuits 107 assurent la liaison avec d'autres centraux téléphoniques, et ne sont bien entendu présents que dans les baies assurant une telle liaison. Le circuit 110 est relié aux lignes d'abonnés correspondantes.

Le circuit de sortie du joncteur 105 et les circuits 107 sont reliés à un réseau de connexion sortant 111 et à un réseau de connexion entrant 112.

Le demi-alvéole 102 comprend une unité de traitement 113 (à calculateur numérique et mémoires de programme et de données) reliés à un bus 114 auquel sont reliés d'autre part: un organe central de signalisation à changement d'état 115, un marqueur 116, et un circuit 118 de mémorisation de canaux sémaphore décrit ci-dessous plus en détail. Le demi-alvéole 102 comprend également un circuit 117 de voies source (tonalités et films). Les éléments 115, 116 et 118 sont réliés d'autre part à un autre bus 119 qui n'est pas relié à l'unité de traitement 113, mais à l'unité de traitement correspondante du deuxième demi-alvéole d'unité de traitement 102A identique au demi-alvéole 102. Les éléments de ce deuxième demi-alvéole correspondant aux éléments 115, 116, et 118 sont donc réliés à deux bus dont l'un n'est relié qu'à l'unité de traitement de ce deuxième demi-alvéole, et dont l'autre n'est relié qu'à l'unité de traitement 113, ce qui forme un système dupliqué d'unités de traitement assurant la sécurité en cas de panne de l'une des deux unités de traitement.

Le demi-alvéole 102 comprend en outre un distributeur de temps 120 fournissant les signaux d'horloge pour tous les circuits de la baie. Le demi-alvéole 102 comprend également le demi-réseau de connexion 121 dont l'entrée est reliée aux sorties des différents réseaux 111 des alvéoles 101 de la même baie et dont la sortie est reliée via un circuit de synchronisation 122 et un faisceau de jonctions MIC aux entrées correspondantes des autres baies du central, et ce demi-alvéole 102 comprend le demi-réseau de connexion 123 dont la sortie est reliée aux extrées des différents réseaux 112 des alvéoles 101 de la même baie, et dont l'entrée est reliée via un circuit de synchronisation 124 aux sorties correspondantes des autres baies du central.

Le circuit 115 est relie aux circuits 107 et aux circuits 105 des différents alvéoles 101 de la même baie. Le marqueur 116 est relié aux réseaux de connexion 111 et 112 des différents alvéoles 101 et aux réseaux 121 et 123 du demi-alvéole 102. Le circuit 117 est relié aux réseaux 112 des différents alvéoles 101. Le circuit 118 est relié aux demi-réseaux 121 et 123.

Les circuits de synchronisation 122, 124 et celui du joncteur 105 comportent les circuits intégrées MTC et MEH et deux transformateurs décrits dans les communications précités ISS 1979 (figure 8 en particulier) et 1981, et fonctionnent de la façon décrite dans le brevet français 8 200 234. Les demi-réseaux 121 et 123 comportent chacun de une à trois matrices temporelles symétriques en fonction du trafic de la baie. Tous les réseaux de connexion de tous les alvéoles de toutes les baies formant le réseau de connexion réparti du central téléphonique.

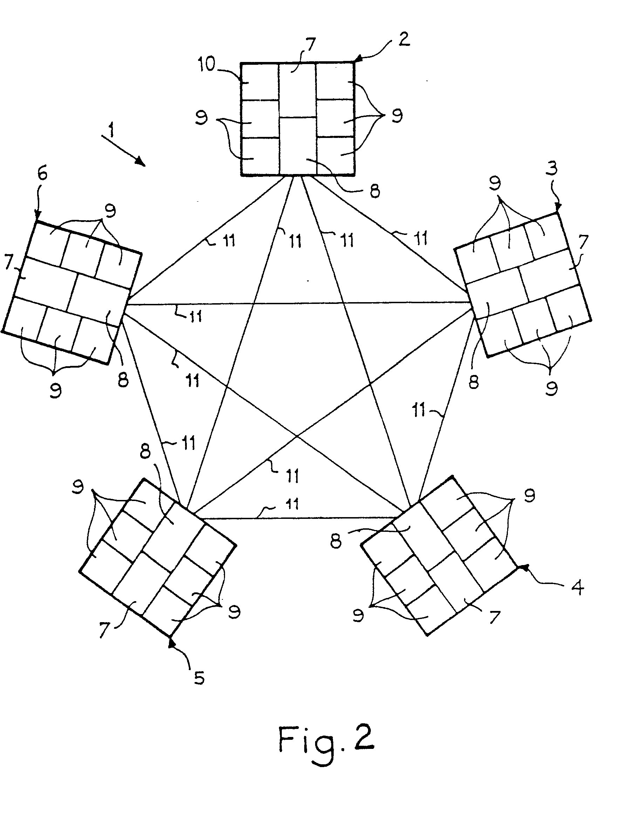

On a représenté sur la figure 2, de façon très simplifiée, un groupe 1 de cinq baies par exemple, référencées 2 à 6 respectivement. Chaque baie comporte essentiellement une unité de commande 7, un réseau réparti de connexion 8, sur lequel sont raccordés plusieurs alvéoles 9 de circuits d'abonnés, et d'autres circuits classiques (non représentés sur la figure 2). Selon un mode de réalisation préféré, le nombre d'alvéoles de circuits d'abonnés peut varier de un à six, chaque alvéole comportant les circuits nécessaires au raccordement de 256 abonnés. Toutefois, dans le cas où le centrale téléphonique est une central de transit, les alvéoles précités comportent les joncteurs appropriés. Dans le cas représente sur la figure 2, chaque baie comporte six alvéoles références 9. Cependant, dans l'une des baies, par exemple dans la baie référencée 2, on remplace un alvéole 9 par un alvéole 10 comportant des circuits de commutation de signalisation et de parole décrits ci-dessous. Dans tout le texte de la présente demande, on emploie le terme "parole" pour désigner toutes les informations (données, signaux, vidéo etc.) pouvant être transmises par le central téléphonique.

Les baies 2 à 6 sont reliées en "point à point" par des jonctions MIC bidirectionnelles référencées 11, c'est-à-dire que n'importe quelle baie est reliée à chacune des autres baies par deux faisceaux de jonctions MIC bidirectionnelles. Dans le cas illustré sur la figure 2, quatre jonctions MIC bidirectionnelles partent de chaque baie, et, au total, le groupe 1 comporte au moins dix jonctions doublées MIC référencées 11.

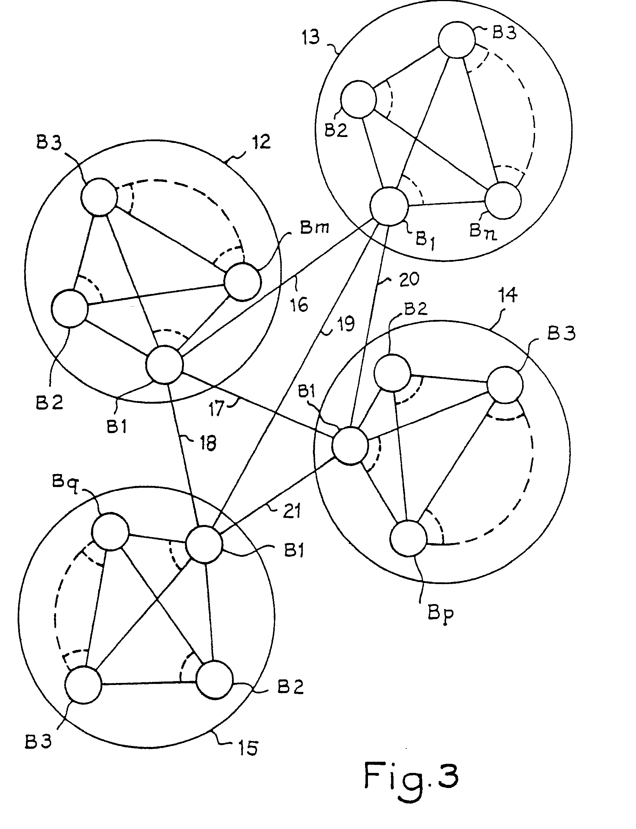

On a représenté sur la figure 3, de façon très simplifiée, un central téléphonique conforme à l'invention. Ce central comporte quatre groupes de baies références12, 13, 14 et 15 respectivement, et similaires au groupe 1 de la figure 2. Les groupes 12, 13, 14 et 15 comportent respectivement $m$, $n$, $p$, $q$, baies. Selon un mode de réalisation de l'invention, ces nombres $m$, $n$, $p$, $q$ sont au maximum ègaux à huit. Dans chacun de ces groupes, les baies sont référencées B1, B2, ... jusqu'à Bm, Bn, Bp et Bq respectivement. Pour simplifier, les baies référencées B1, sont les baies dites de commutation de signalisation et de parole. Toutefois, le central de l'invention n'est pas limité à quatre groupes, mais peut en comporter de un à huit dans le mode de réalisation préféré.

Toutes les baies de chaque groupe sont reliées entre elles en point à point par des jonctions MIC bidirectionnelles. Par conséquent, dans le cas où Bm = Bn = Bp = Bq = 8, sept faisceaux doublés de jonctions MIC bidirectionnelles partent de chaque baie vers chacune des autres baies du même groupe. Pour ne pas surcharger le dessin, on n'a pas représenté toutes ces jonctions MIC. En outre, toutes les baies B1 du central téléphonique sont reliées entre elles en point à point par au moins une jonction bidirectionnelle. Dans le mode de réalisation représente sur le dessin, six jonctions MIC bidirectionnelles référencées 16 à 21 relient entre elles les quatre baies B1 du central. Dans le cas où le central comporterait huit groupes, vingt-huit jonctions MIC relieraient entre elles les huit baies B1 du central. On a représenté quelques jonctions MIC à l'intérieur des groupes, et seulement celles nécessaires à la comprehension de l'invention. Dans chacun des groupes 12 à 15, on a seulement représenté quatre baies, à savoir les trois premières baies B1, B2, B3, et la dernière baie Bm, Bn, Bp et Bq respectivement, étant entendu que chaque groupe comporte au moins quatre baies dans l'exemple représenté sur la figure 3.

Les signaux de signalisation et de parole entre baies de groupes différents transitent obligatoirement par les jonctions MIC reliant les baies B1 correspondantes.

A l'intérieur d'un group de baies, la signalisation est échangée, entre deux baies quelconques, sur un intervalle de temps déterminé de la trame temporelle véhiculée dans chaque sens par la jonction MIC bidirectionnelle reliant ces deux baies. Pour utiliser de façon rationnelle les circuits existants, cet intervalle de temps est avantageusement l'intervalle de temps n° 16. Bien entendu, n'importe quel autre intervalle de temps d'une trame peut convenir, sauf l'intervalle de temps n° 0 qui est réservé au code de verrouillage de trame. Afin de simplifier la réalisation du central, à l'intérieur de chacun des groupes 12 à 15, les signaux de signalisation sont portés par le même intervalle de temps pour l'ensemble du central.

L'échange de signalisation entre deux baies appartenant à deux groupes différents passe obligatoirement, comme précisé ci-dessus, par une baie B1, et utilise un autre intervalle de temps que celui déjà utilisé pour les échanges de signalisation à l'intérieur d'un même groupe. On peut par exemple utiliser l'intervalle de temps n° 5 à cet effet, et c'est le mode de réalisation utilisant cet intervalle de temps qui est décrit ci-dessous.

Ainsi, dans un même groupe, par exemple le groupe 12, sur les jonctions MIC entre les baies B2, B3 et Bm par exemple, seuls les intervalles de temps n° 16 servent à des échanges de signalisation. Par contre, sur toutes les jonctions MIC reliant la baie B1 aux autres baies de ce groupe, deux intervalles de temps sont utilisés pour des échanges de signalisation: l'intervalle de temps n° 16 pour les échanges de signalisation entre la baie B1 et chacune de ces bais respectivement, et l'intervalle de temps n° 5 pour les échanges de signalisation entre les baies de ce groupe 12 et des baies d'autres groupes, la baie B1 servant alors de "relais". Bien entendu, lorsque la baie B1 elle-même doit échangeur de la signalisation avec une baie d'un autre groupe, elle utilise l'intervalle de temps n° 5 sur la jonction 16, 17 ou 18 suivant la cas. Sur les jonctions 16 à 21, seuls les intervalles de temps n° 5 sont utilisés pour les échanges de signalisation. Dans le cas le plus général, lorsqu'une première baie, différente de la baie B1 d'un groupe, veut échanger de la signalisation avec une seconde baie faisant partie d'un autre groupe, et différente de la baie B1 de cet autre groupe, la signalisation est véhiculée sur l'intervalle de temps n° 5 de la jonction MIC reliant cette première baie à la baie B1 de son groupe, puis cette signalisation est réémise sur l'intervalle de temps n° 5, après analyse, sur la jonction MIC reliant cette baie B1 à la baie B1 choisie dudit autre groupe, puis est réémise encore une fois sur l'intervalle de temps n° 5 de la jonction MIC reliant cette denière baie B1 à ladite seconde baie choisie.

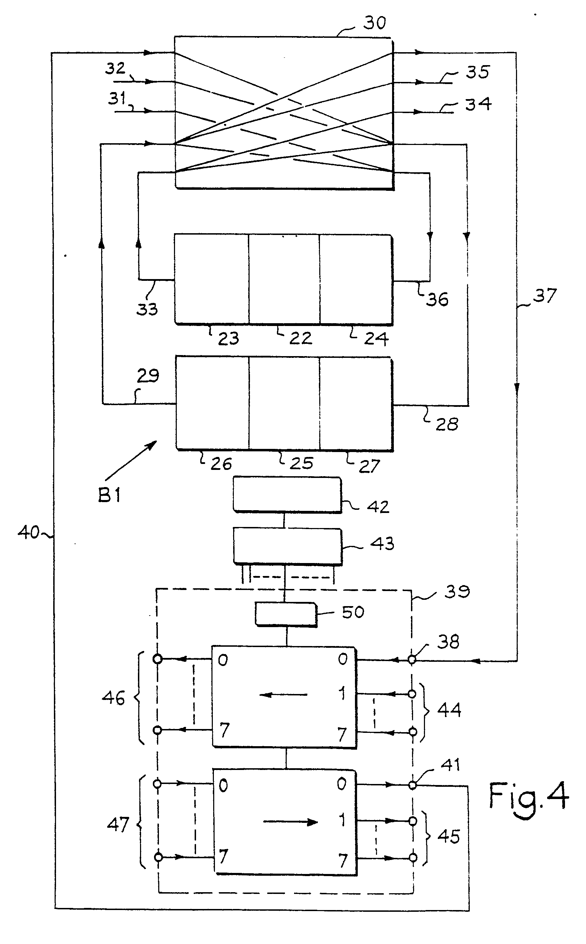

On va maintenant expliquer, en référence à la figure 4, comment se fait la commutation des signaux de signalisation dans une baie B1. Cette figure 4 se rapporte à une central à huit groupes de huit baies et n'est pas un schéma de réalisation, mais un diagramme fonctionnel de circulation d'intervalles de temps porteurs de signalisation. Les réseaux de connexion représentés sur cette figure 4 commutent la signalisation et les informations (parole, données, signaux vidéo ...), mais pour simplifier les explications, on ne décrira que la commutation de la signalisation, la commutation des informations se faisant de façon classique. On a représenté sur cette figure 4 l'unité de traitement 22 de la baie B1 avec ses interfaces 23 et 24 de mémorisation de canaux sémaphores pour l'émission et pour la réception de la signalisation respectivement. Cette unité de traitement téléphonique avec ses circuits d'interface 23 et 24 se retrouve en 7 sur la figure 2 dans toute les baies. La baie B1 comporte en outre, en lieu et place d'un alvéole terminal de circuits d'abonnés, et/ou joncteurs suivant les bas, un alvéole comportant un circuit de commutation de signalisation 25 sont le matériel est identique à celui de l'unité de traitement 22, et deux interfaces 26, 27 respectivement identiques aux interfaces 23 et 24, ces trois éléments étant avantageusement dupliqués.

Le logiciel du circuit 25 est prévu pour lui permettre de transférer, sans en modifier le contenu, des signaux de signalisation se présentant sur des intervalles de temps d'une jonction 28 reliée à l'entrée du circuit 27 vers des intervalles de temps analogues d'une jonction 29 relié à la sortie du circuit 26. La baie B1 comporte également le réseau de connexion réparti 30 (ce réseau de connexion se retrouve en 8 sur la figure 2) dont les entrées reçoivent respectivement des signaux de signalisation sur sept intervalles de temps n° 16 (dans le cas pris en exemple ci-dessus) référencés 31 dans leur ensemble, ainsi que sur sept intervalles de temps n° 5 (dans le même exemple) référencés 32 dans leur ensemble, ces quatorze intervalles de temps étant transmis par les sept jonctions entrantes provenant des sept autres baies du même groupe. De façon avantageuse, le réseau 30 comprend, pour des mesures de sécurité de transmission, deux demi-réseaux de connexion (référencés 121, 123 dans les blocs 102 et 102A de la figure 1) reliés chacun, d'une part, à chaque alvéole de circuits d'abonnés et/ou de joncteurs, et d'autre part à chacun des deux faisceaux de jonctions MIC bidirectionnelles interbaies. Le réseau 30 est marqué par un marqueur (non représenté sur la figure 4) que l'on retrouve en 116 sur la figure 1. Le réseau 30 est d'autre part reliée à la jonction entrante 29 provenant du circuit 26, à la jonction entrante 33 provenant du circuit 23. Les sorties du réseau de connexion 30 envoient des signaux de signalisation respectivement sur sept intervalles de temps n° 16, référencés 34 dans leur ensemble, et sur sept intervalles de temps n° 5, référencés 35 dans leur ensemble, ces quatorze intervalles de temps étant transmis par les sept jonctions sortantes se dirigeant vers les sept autre baies du même groupe. Le réseau 30 est d'autre part relié à la jonction sortante 36 se dirigeant vers le circuit 24 et à la jonction sortante 28 se dirigeant vers le circuit 27. Bien entendu, chacune des jonctions entrantes et sortantes, reliant le réseau 30 aux réseaux correspondants des autres baies du même groupe, transmet de la signalisation sur un intervalle de temps n° 16 et un intervalle de temps n° 5, les autres intervalles de temps (sauf celui numéroté zéro) étant réservés à la transmission normale de parole et de données entre le baie B1 et les autres baies du même groupe. Comme précisé ci-dessus, et pour le case pris, en exemple, les intervalles de temps n° 16 sont exclusivement réservés à la transmission de la signalisation à l'intérieure du même groupe, tandis que les intervalles de temps n° 5 sont exclusivement réservés à la transmission de la signalisation entre baies de groupes différents par l'intermédiaire des baies B1 correspondantes.

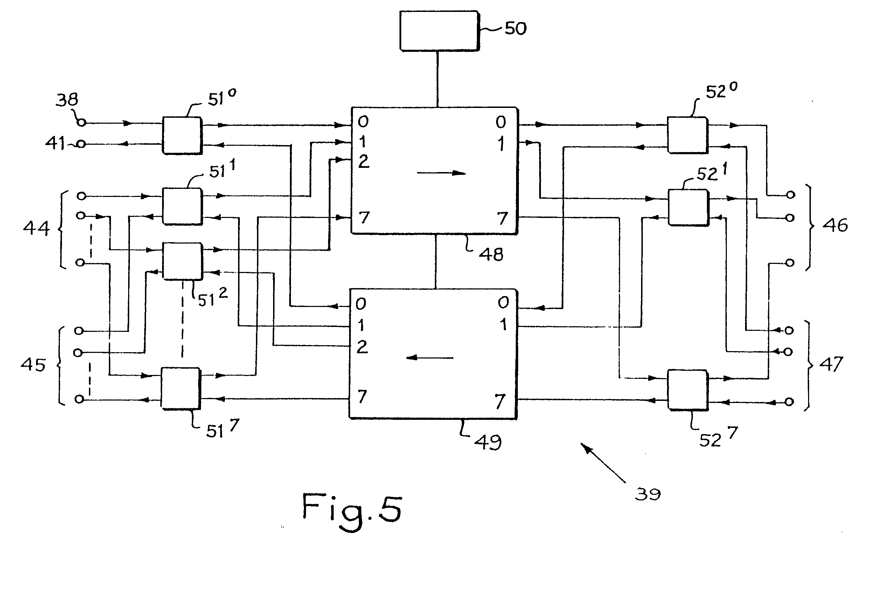

Les réseau 30 est également relié par une jonction sortante 37 à une entrée 38 d'une matrice de connexion 39, décrite ci-dessous en référence à la figure 5, et par une jonction sortante 40 à une sortie 41 de la matrice 39. Le réseau 30 est relié à $r$ matrices, identiques à la matrice 39, par $r$ jonctions MIC bidirectionnelles (c'est-à-dire formées chacune d'une jonction sortante telle que la jonction 37 et d'une jonction entrante telle que la jonction 40). Selon un mode de réalisation préféré, $r$ peut varier de 2 à 16 en fonction du trafic téléphonique de la baie considérée. Pour simplifier le dessin, on n'a représenté qu'une seule de ces $r$ matrices 39 sur la figure 4. les $r$ matrices 39 de la baie sont commandées en commun par un marqueur 42 et un module de sélection logique 43. Le module 43 est du type décrit dans la susdite communication à l'ISS de 1981 et dans la demande de brevet français 81 06 429.

La matrice 39 comporte sept autres entrées, situées du même côté que l'entrée 38, référencées 44 dans leur ensemble. Ces sept entrées 44 sont reliées par des jonctions MIC à une sortie des réseaux de connexion (non représentés) de chacune des sept autres baies du même groupe que celui comporte la baie B1 en question. La matrice 39 comporte également sept autres sorties, situées du même côté que la sortie 41, référencées 45 dans leur ensemble. Ces sept sorties 45 sont reliées par des jonctions MIC à une entrée desdits réseaux de connexion de chacune des sept autres baies.

La matrice 39 comporte, d'autre part, huit sorties, référencées 46 dans leur ensemble, sur lesquelles peuvent être aiguillés les contenus des intervalles de temps de la jonction 37 reliée à l'entrée 38 (signalisations du groupe en question et parole de la baie B1) et 44 (parole seule). Les sorties 46 sont destinées à être reliées par des jonctions MIC à des entrées homologues des matrices de connexion de chacune des autre groupes de baies du central téléphonique. Or, comme précise, ci-dessus, le central comporte, dans le mode de réalisation décrit ici, huit groupes de baies; donc sept de ces huit sorties 46 sont effectivement respectivement reliées à chacun des sept autres groupes (c'est-à-dire les groupes autre que celui contenant la baie B1 en question). Le huitième sortie, ne peut, bien entendu, être rebouclée sur la matrice 39 en question, ce qui n'aurait aucun sens. L'invention prévoit, selon une caractéristique avantageuse, pour utiliser cette huitième sortie, l'implantation dans une autre baie du groupe considéré, par exemple dans la baie B4, d'un alvéole de commutation de signalisation et de parole identique à celui implanté dans la baie B1. On procède de même à l'intérieur de chaque groupe de baies. Bien entendu, étant donnée que le central de l'invention est modulaire, et étant donné que les alvéoles de commutation de signalisation et de parole peuvent être implantés dans n'importe quelle baie de chaque groupe, les numéros des baies comportant le deuxième alvéole de commutation de signalisation et de parole peuvent varier d'un groupe à l'autre, mais pour simplifier les explications, on suppose que ce sont les baies B4 dans tous les groupes (de même que l'on suppose que les baies B1 de tous les groupes comportent le premier alvéole de commutation de signalisation et de parole). D'autre part, le matrice 39 comporte huit entrées 47 sur lesquelles sont reçues des informations (parole et signalisation) depuis des sorties homologues desdites matrices de connexion de chacun des autres groupes de baies, ainsi que de la baie B4 de groupe considéré. Ainsi, les matrices de connexion de toutes les baies B1 du central sont reliées entre elles en point à point, et les matrices de connexion de toutes les baies B4 sont réliées entre elles en point à point, et d'autre part, à l'intérieur de chaque groupe la matrice de connexion de la baie B4 est reliée à la matrice de la baie B1. Toutes les baies autres que les baies B1 et B4 ne sont pas reliées à des baies d'autres groupes; leurs signaux de parole et de signalisation, lorsqu'ils sont destinées à des baies d'autres groupes passent obligatoirement par l'alvéole de commutation de signalisation et de parole de la baie B1 et B4 (ces deux alvéoles fonctionnent en partage de charge) de leur groupe, puis de la baie B1 du groupe de la baie demandée. Par conséquent, en case de panne de l'alvéole de commutation de signalisation et de parole de la baie B1 d'un groupe, les autres baies du groupe pourront entrer en contact avec les baies de tous les autres groupes par l'intermédiaire de l'alvéole de commutation de signalisation et de parole de la base B4 de leur propre groupe. Les contenus des intervalles de temps véhiculés par les jonctions reliées aux entrées 47 sont aiguillés vers la jonction 40 (signalisation pour le groupe en question et parole pour la baie B1) et vers les sorties 45 (parole seule).

Les huit intervalles de temps portés par les jonctions 37 et 40 ont le même contenu que les intervalles de temps n° 5 portés par les jonctions partant des sorties 46 et arrivant sur les entrées 47, respectivement. Ces huit intervalles de temps sont choisis arbitrairement parmi les intervalles de temps portés par les jonctions 37 et 40, sauf l'intervalle de temps N° 0 qui est réservé au code de verrouillage de trame. De préférence, ces huit intervalles de temps sont les mêmes sur ces deux jonctions.

Les références 31, 32, 34 et 35 désignent des ensembles d'intervalles de temps (qui n'ont pas de réalité matérielle), alors que les références 28, 29, 33, 36, 37 et 40 désignent des jonctions (qui ont une existence matérielle) sur lesquelles ont été aiguillés les contenus des intervalles de temps n° 5 d'une part et n° 16 d'autre part.

Les sept intervalles de temps n° 16 de signalisation référencés 31, ainsi que l'un des intervalles de temps transmis par la jonction 29, sont commutés par le réseau 30 sur la jonction 36 et traités par l'unité de traitement 22 dans l'ordre suivant lequel ils lui sont transmis par le circuit 24. On remarquera que sur la jonction 36, tout comme sur les jonctions 28, 29 et 33, les intervalles de temps généralement réservés à la transmission de la parole et des données sont arbitrairement affectés à la transmission des signaux de signalisation L'unité de traitement 22 envoie ses signaux de signalisation, via le circuit 23, sur la jonction 33. Sept des intervalles de temps affectés arbitrairement à ces signaux de signalisation sur la jonction 33 sont aiguillés par le réseau 30 sur les intervalles de temps n° 16 référencés 34, et le huitième est commuté sur la jonction 28, ce huitième intervalle de temps véhiculant une signalisation qui sera commutée, à la sortie du réseau 30 sur un intervalle de temps de la jonction 37 à destination d'une baie d'un autre groupe.

Les sept intervalles de temps n° 5, référencés 32, huit des intervalles de temps portés par la jonction 40 et ledit huitième intervalle de temps transmis par la jonction 33 sont commutés par le réseau 30 sur la jonction 28. Ces seize intervalles de temps transmis par la jonction 28 sont mémorisés dans le circuit 27 et transmis consécutivement, dans leur ordre d'arrivée, au circuit 25 qui en commute le contenu, via le circuit 26, vers des intervalles de temps appropriés de la jonction 29. Parmi ces seize intervalles de temps de signalisation de la jonction 29, l'un est commuté par le réseau 30 vers un intervalle de temps de la jonction 36 (si son contenu concerne la baie B1 en question), sept autres sont commutés respectivement vers le sept intervalles de temps n° 5 référencés 35 (si leur contenu concerne les autres baies du même groupe), et les huit derniers sont commutés vers la jonction 37 pour être aiguillés par la matrice 39 vers les sorties 46 correspondantes (si leur contenu concerne l'une quelconque des baies des autres groupes).

Ainsi, l'unité de traitement 22, qui peut traiter, dans l'exemple de réalisation, seize canaux sémaphores au maximum, n'en traite que huit. Selon une caractéristique intéressante de l'invention, cette unité de traitement peut dialoguer avec le monde extérieur par l'intermédiaire d'au moins un des huit canaux restants.

La matrice de connexion 39 représentée en detail sur la figure 5 comporte deux matrices temporelles symétriques 48 et 49, à huit entrées et huit sorties chacune. Ces deux matrices 48 et 49 sont contrôlées par un circuit 50 dit "module de sélection logique", identique au circuit 43 de la figure 4.

Pour simplifier la description, on suppose que les matrices 48 et 49 sont disposées l'une au-dessus de l'autre, que les entrées de la matrice 48 sont toutes à gauche, numérotées 0 à 7 de haut en bas, que ses sorties sont toutes à droite et également numérotées 0 à 7 de haut en bas, et que pour la matrice 49 les sorties sont toutes à gauche et les entrées toutes à droite, entrées et sorties étant également numérotées 0 à 7 de haut en bas.

Les entrées de matrice 48 et les sorties de la matrice 49 sont respectivement reliées à des sorties et à des entrées, côté commutation (côté MTC-voir figure 8 du susdit ISS79) de circuits de synchronisation respectivement référencés $51^0$ à $51^7$ de haut en bas. Les circuits $51^0$ à $51^7$ sont les mêmes circuits de synchronisation que les circuits 122 et 124 de la figure 1. L'entrée et la sortie, côté jonctions MIC (côté transformateurs), du circuit $51^0$ sont respectivement reliées à l'entrée 38 et à la sortie 41 (voir figure 4). Les entrées et les sorties des circuits $51^1$ à $51^7$, côté jonctions MIC, sont respectivement reliées aux entrées 44 et aux sorties 45 (voir figure 4).

Les sorties de la matrice 48 et les entrées de la matrice 49 sont respectivement reliées à des entrées et à des sorties, côté commutation, de circuits de synchronisation $52^0$ à $52^7$ identiques aux circuits $51^0$ à $51^7$. Les entrées et les sorties des circuits $52^0$ à $52^7$, côté jonctions MIC, sont respectivement reliées aux entrées 47 et aux sorties 46 (voir figure 4).

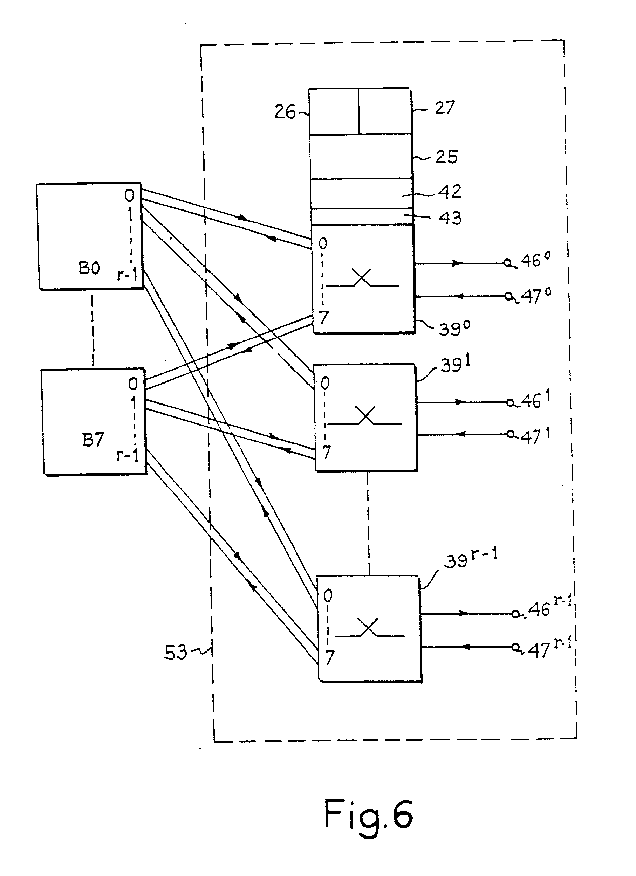

On a représenté sur la figure 6 le bloc-diagramme simplifié d'un alvéole de commutation 53 conforme à l'invention relié à huit baies, référencées B0 à B7 et constituant un groupe de baies.

L'alvéole 53 comporte les éléments 25, 26, 27, 42 et 43 représentés sur la figure 4, et $r$ matrices de connexion $39^0$ à $39^{r-1}$ identiques à la matrice 39 représentée sur la figure 5, ces $r$ matrices étant toutes commandées par le marqueur 42.

Les matrices $39^0$ à $39^{r-1}$ sont reliés d'une part (côté gauche sur la figure 6, comme sur la figure 5), par des jonctions MIC bidirectionnelles, aux huit baies B0 à B7 du groupe dans lequel est situé l'alvéole en question, et d'autre part (côté droit sur la figure 6 et la figure 5), également par des jonctions MIC bidirectionnelles, aux matrices correspondantes, des baies B1 des sept autres groupes et de la baie B4 du même groupe.

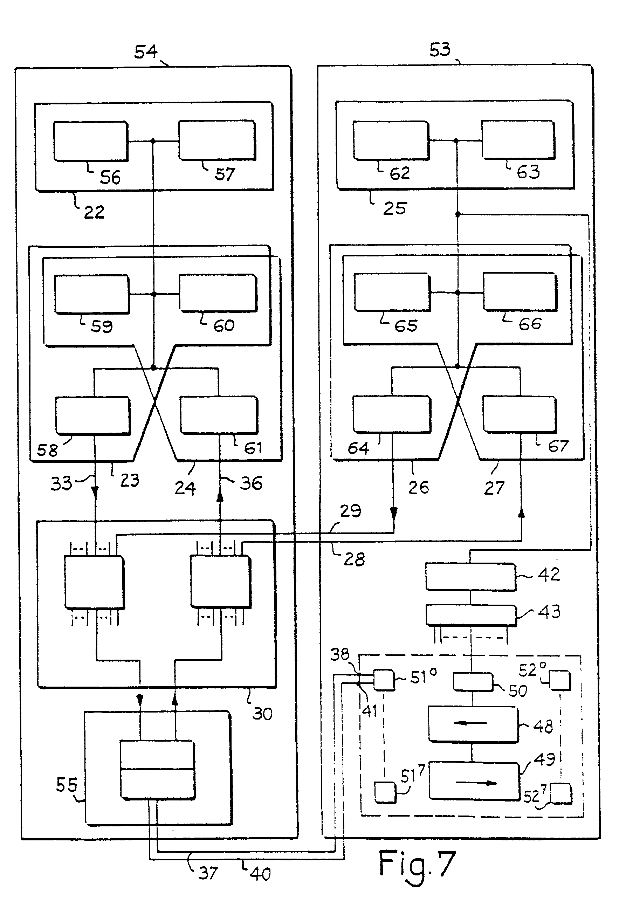

Les $r$ sorties et entrées des baies B0 à B7 (sorties et entrées des circuits de synchronisation 55 décrits ci-dessus en référence à la figure 7) sont référencées, pour chaque baie, simplement par leur rang 0 à $r-1$. Les huit entrées et sorties des matrices $39^0$ à $39^{r-1}$ relatives aux baies du même groupe sont simplement référencées, sur la figure 6 uniquement, par leur rang 0 à 7. On remarquera que pour les matrices $39^0$ à $39^{r-1}$ les entrées et sorties de rang 0 correspondent à l'entrée 38 et à la sortie 41 de la figure 5, alors que les autres entrées de ces matrices sont référencées 45 sur cette même figure 5.

Les entrées et sorties de rang 0 à $r-1$ de la baie B0 sont reliées par liaisons MIC aux sorties et entrées de rang 0 des matrices $39^0$ à $39^{r-1}$ respectivement. Les entrées et sorties de rang 0 à $r-1$ de la baie B1 sont reliées aux sorties et entrées de rang 1 des matrices $39^0$ à $39^{r-1}$, et ainsi de suite pour les autres baies, jusqu'à la baie B7 dont les entrées et sorties de rang 0 à $r-1$ sont respectivement reliées aux sorties et entrées de rang 7 des matrices $39^0$ à $39^{r-1}$.

Les $r$ sorties $46^0$ à $46^{r-1}$ et les $r$ entrées $47^0$ à $47^{r-1}$ des matrices $39^0$ à $39^{r-1}$ sont reliées, comme précisé ci-dessus aux entrées et sorties correspondantes respectivement des baies B1 des sept autres groupes et de la baie B4 du même groupe.

En fonctionnement normal, la signalisation des baies B0 à B7 à destination de baies d'autres groupes (donc contenue dans les intervalles de temps n° 5 des jonctions MIC reliant ces baies à leur alvéole de commutation) n'est envoyée qu'à la matrice $39^0$ par exemple. En cas de panne de cette matrice, le marqueur 42 et les marqueurs de baies du groupe aiguillent la signalisation vers une autre des matrices $39^1$ à $39^{r-1}$.

On va maintenant décrire, en référence à la figure 7, les interfaces de mémorisation de canaux sémaphores associées à l'unité de traitement et au calculateur de commutation de signalisation et de parole disposés dans des alvéoles des baies B1 et B4. Comme précisé ci-dessus, dans les baies B1 et B4 d'un groupe, un alvéole de commutation de signalisation et de parole est disposé à la place d'un alvéole de module terminal (alvéole comportant des circuits de ligne et/ou des joncteurs et une partie de réseau de connexion réparti). L'alvéole de commutation de signalisation et de parole coopère avec le même connecteur et la même jonction entre ce connecteur et le réseau de connexion de la baie en question que ceux prévus pour l'alvéole de module terminal dont l'alvéole de commutation de signalisation et de parole vient prendre la place. Ainsi, l'alvéole de commutation de signalisation et de parole peut être implanté dans n'importe quelle baie du central téléphonique. Cet alvéole de commutation de signalisation et de parole comporte essentiellement les éléments référencés 25 à 28 ainsi que 39, 42 et 43 sur la figure 4 et utilise les mêmes connecteurs que l'alvéole de module terminal sans aucun changement. En outre l'alvéole de commutation de signalisation et de parole comporte avantageusement le même matériel de traitement que l'alvéole de l'unité de traitement (éléments 22 à 24 correspondant respectivement aux éléments 25 à 27) seul leur logiciel est différent. Les autres baies du groupe ne comportent, outre les alvéoles de modules terminaux, qu'un alvéole d'unité de traitement identique à celui des baies B1 et B4.

On a représenté sur la figure 7 le bloc-diagramme simplifié de l'alvéole 54 de l'unité de traitement et de l'alvéole 53 de commutation de signalisation et de parole, ainsi que le réseau de connexion 30 et un des circuits de synchronisation 55 reliant le réseau de connexion 30 à la matrice 39 de l'alvéole 53. Le nombre de ces circuits de synchronisation est égal au nombre de baies du groupe considéré, mais pour la clarté du dessin, on n'en a représenté qu'un seul.

L'alvéole 54 comporte l'unité de traitement 22 et les interfaces 23 et 24. L'unité de traitement 22 comprend essentiellement un calculateur numérique 56 avec ses mémoires 57 de données et de programme.

L'interface 23 comprend essentiellement un circuit logique d'émission 58 commandé par un calculateur 59, de préférence identique au calculateur 56, associé à des mémoires 60 de données et de programme et tampon. Le calculateur 59 et les mémoires 60 coopèrent également avec un circuit logique de réception 61 en formant avec lui le circuit d'interface 24. Le réseau de connexion 30 comporte plusieurs matrices de commutation, de préférence des matrices temporelles symétriques branchées et commandées de façon connue, en soi. Les circuits de synchronisation 55 assurent la liaison entre le réseau de connexion 30 et les différents faisceaux de jonctions MIC bidirectionnelles, telles que le couple de jonctions 37 et 40, reliant les différentes baies du groupe considéré en "point à point" comme représenté en figure 1. Ces circuits de synchronisation 55 permettent de synchroniser entre elles toutes les baies du central sans perte d'informations. Ces circuits de synchronisation sont identiques aux circuits $51^0$ à $51^7$, $52^0$ à $52^7$ et 122, 124.

Le circuit de calcul 25 comporte essentiellement un calculateur 62 et des mémoires 63 de données et de programme. Le circuit d'interface 26 comporte un circuit logique d'émission 64 commandé par un calculateur 65, de préférence identique au calculateur 62, associé à des mémoires 66 de données et de programme et tampon. Ce calculateur 65 avec ses mémoires 66 coopère également avec un circuit logique de réception 67 en formant avec lui le circuit 27. Comme précisé ci-dessus, les alvéoles 53 et 54 comportent avantageusement des éléments respectivement identiques. Comme déjà évoqué ci-desus à propos de la figure 4, le circuit logique d'émission 64 du circuit 26 est relié par la jonction 29 au réseau de connexion 30, et le circuit logique de réception 67 du circuit 27 est relié par la jonction 28 au réseau du connexion 30.

Les intervalles de temps n° 16, porteurs de signalisation intragroupe, sont directement traités, de façon habituelle, par l'unité de traitement de chaque baie concernée. Toutes les baies comportent un alvéole à l'unité de traitement identique à l'alvéole 54 représenté sur la figure 7. Les baies B1 et B4 comportent en plus un alvéole de commutation de signalisation et de parole tel que l'alvéole 53 représenté sur la figure 7. Dans la description qui suit, on se référera donc à la figure 7 qu'il s'agisse des baies B1 et B4 ou des autres baies.

L'alvéole d'unité de traitement 54 comporte en particulier une mémoire tampon (faisant partie de l'ensemble des mémoires 60) associée aux circuits d'interface 23 et 24. Cette mémoire tampon permet de stocker temporairement le contenu des intervalles de temps porteurs de signalisation véhicules par la jonction 36, ainsi que de stocker ceux devant partir par la jonction 33.

Dans les baies B1 et B4, l'aiguillage semi permanent (cet aiguillage est établi lors de l'initialisation ou d'une ré-initialisation éventuelle de la baie) des intervalles de temps de signalisation inter-groupes n° 5 vers les circuits d'interface associés au circuit de commutation 25 via la matrice 39 est assuré par le réseau de connexion 30 sous le commande de l'unité de traitement 22. Par conséquent, le circuit de commutation 25 ne peut ni rechercher un chemin ni marquer un chemin pour ces intervalles de temps de signalisation, mais en faire la demande à l'unité de traitement 22.

Les alvéoles 53 de commutation de signalisation et de parole comportent également, en particulier, une mémoire tampon dans le groupe de mémoires 66. Cette mémoire tampon assure le stockage des intervalles de temps de signalisation inter-groupes (n° 5 avant la matrice 39) arrivant par la jonction 28, ainsi que des intervalles de temps partant par la jonction 29 pour passer, à la sortie du réseau 30, sur la jonction 36 ou la jonction 37 ou devenir des intervalles de temps n° 5 de l'ensemble 35. Cette mémoire est donc accessible par les calculateurs 62 et 65, et par les circuits logiques d'émission et de réception 64 et 67.

Si l'on se réfère aux niveaux de traitement définis par la signalisation CCITT n° 7, à savoir les niveaux 4 (utilisateur), 3 (réseau), 2 (canal sémaphore) et 1 (support physique de transmission), ces niveaux sont respectivement traités de la façon suivante. Dans l'alvéole de l'unité de traitement: les niveaux 4 et 3 par le calculateur 56, le niveau 2 par le calculateur 59 des interfaces 23 et 24, et le niveau 1 par les circuits de synchronisation et les jonctions MIC correspondantes. Dans l'alvéole de commutation de signalisation: le niveau 3 par le calculateur 62, le niveau 2 par le calculateur 65 des interfaces 26 et 27, et le niveau 1 par les jonctions MIC correspondantes.

Bien, entendu, pour des raisons de sécurité, on peut doubler le calculateur de l'unité de traitement, les deux calculateurs fonctionnant alors en microsynchronisme et étant associés chacun à ses deux propres circuits d'interface tels que les circuit 23 et 24 qui fonctionnent en partage de charge, ces deux ensembles de deux circuits d'interface étant branchés chacun sur le demi-réseau de connexion précité.

Le circuits logiques d'émission tels que les circuits 58 et 64 traitent, dans le mode de réalisation préféré, au maximum seize canaux sémaphores. Ces circuits réalisent donc alors un multiplex de seize canaux de signalisation sur une jonction (29 ou 33) dont la capacité est de trente-deux intervalles de temps. Un intervalle de temps sur deux est donc utilisé sur ces jonctions.

Pour traiter chaque canal, le circuit logique d'émission dispose de 2 × 3,9 microsecondes (téléphonie MIC-CEPT) toutes les 125 microsecondes, temps pendant lequel il réalise les fonctions suivantes: insertion de "0" de remplissage, création du drapeau, calcul du CRT (seize éléments binaires de contrôle de trame), lecture dans la mémoire tampon des octets de signalisation à émettre, émission continue de drapeaux, émission de TSR (trames sémaphores de remplissage s'il n'y a pas d'informations utiles à transmettre), émission de TSE (trames sémaphores d'état pour procéder à alignement initial) et de TSM (trames sémaphores de messages). En outre, le circuit logique de gestion (calculateur 59 ou 65) indique si le circuit logique d'émission fonctionne selon la méthode de base ou selon la méthode cyclique (définies par la signalisation CCITT n° 7). La méthode de base est celle qui est retenue pour l'ensemble de la signalisation interne du central dans l'exemple de réalisation préféré.

Les circuits logiques de réception tels que les circuits 61 et 67 traitent, dans le mode de réalisation précité, au maximum seize canaux de signalisation multiplexés sur une jonction (28 ou 36) dont la capacité est de trente-deux intervalles de temps. Un intervalle de temps sur deux est donc alors utilisé. Pour traiter chaque canal, le circuit logique de réception dispose de 2 × 3,9 microsecondes toutes les 125 microsecondes, temps pendant lequel il réalise les fonctions suivantes: extraction des "0" d'insertion, détection du drapeau, calcul du CRT et vérification globale du CRT en fin de trame, rangement des octets de signalisation incidents dans la mémoire tampon, reconnaissance du type des trames reçues (trame d'état, de remplissage ou de message), et échanges avec le circuit logique de gestion (calculateur 59 ou 65).

**Revendications**

1. Central téléphonique modulaire comportant plusieurs baies autocommutatrices autonomes comprenant chacune en particulier des circuits d'abonnés, des joncteurs BF et MIC, une partie de réseau de connexion réparti, une unité de commande et une unité de signalisation, caractérisé par le fait que ces baies sont réparties en plusieurs groupes (12, 13, 14, 15) comportant chacun un nombre quelconque de baies (B1 à Bm, B1 à Bn, B1 à Bp, B1 à Bq, respectivement), que dans chaque groupe une partie (10) d'une baie "dite de commutation de signalisation et de parole" (B1) est affectée aux échanges de signalisation et de parole avec les baies des autres groupes et que toutes les baies de commutation de signalisation et de parole sont reliées entre elles en point à point par jonctions MIC bidirectionnelles.

2. Central téléphonique selon la revendication 1, caractérisé par le fait que ladite partir affectée aux échanges de signalisation et de parole est un alvéole de commutation de signalisation et de parole (53) disposé à la place d'un alvéole de circuits d'abonnées et/ou de joncteurs.

3. Central téléphonique selon la revendication 2, caractérisé par le fait que l'alvéole de commutation de parole et de signalisation coopère avec le même connecteur et là même jonction entre ce connecteur et le réseau de connexion de la baie en question que ceux prévus pour l'alvéole de circuits d'abonnées et/ou de joncteurs.

4. Central téléphonique selon l'une des revendications 2 ou 3, caractérisé par le fait que l'alvéole de commutation de signalisation et de parole comporte un circuit de commutation de signalisation (25), deux interfaces de mémorisation de signalisation (26, 27), et au moins une matrice de connexion (39) commandée par un marqueur (42) et un module de sélection logique (43) connu en soi.

5. Central téléphonique selon la revendication 4, caractérisé par le fait que le circuit de commutation de signalisation comporte un calculateur numérique (62) et des mémoires de données et de programme (63), et que les interfaces de mémorisation de signalisation comportent en commun un calculateur numérique (65) et des mémoires de données de programme, et tampon (66), et comportent respectivement un circuit logique d'émission (64) et un circuit logique de réception (67).

6. Central téléphonique selon la revendication 5 caractérisé par la fait que le matériel de traitement (25 à 27) de l'alvéole de commutation de signalisation est identique au matériel de traitement de l'alvéole de l'unité de traitement (22 à 24 respectivement), seul logiciel étant différent.

7. Central téléphonique selon l'une quelcoque des revendications précédentes, caractérisé par la fait que dans chaque groupe les échanges de signalisation inter-baies se font sur un intervalle de temps déterminé des jonctions MIC reliant en point à point les différentes baies de ce groupe, et par le fait que les échanges de signalisation entre baies de groupes différents passent tous par l'alvéole de commutation de signalisation et de parole de la baie de commutation de signalisation de chacun des groupes concernés et se font sur un autre intervalle de temps déterminé.

8. Central téléphonique selon l'une quelconque des revendications 4 à 7, caractérisé par le fait que la matrice de connexion (39) comporte deux matrices temporelles symétriques (48, 49) commandées par un module de sélection logique (50) connu en soi, les entrées de la première matrice (48) et les sorties de la seconde (49) étant reliées via des circuits de synchronisation ($51^0$ à $51^7$) connus en soi aux réseaux de connexion de toutes les baies du même groupe, et les sorties de la première matrice et les entrées de la seconde étant reliées via des circuits de synchronisation ($52^0$ à $52^7$) connus en soi à des entrées et des sorties, respectivement, des matrices de connexion homologues des autres groupes.

9. Central téléphonique selon l'une quelconque des revendications précédentes, caractérisé par le fait que chaque groupe comporte, dans une baie (B4) autre que la baie de commutation de signalisation et de parole précitée, un second alvéole de commutation de signalisation et de parole identique au premier, ce second alvéole étant relié au premier comme s'il appartenait à un groupe différent (sortie 46 et entrée 47), tous les seconds alvéole étant reliés entre eux en point à point par jonctions MIC bidirectionnelles.

10. Central téléphonique selon l'une quelconque des revendications précédentes, comportant au maximum huit groupes de huit baies chacune, et dans lequel l'unité de traitement (22) peut traiter au maximum seize canaux sémaphores, huit de ces seize canaux étant utilisés pour les échanges de signalisation inter-baies, caractérisé par le fait que cette unité de traitement peut dialoguer avec le mode extérieur par l'intermédiaire d'au moins un des huit canaux sémaphores restants.

**Patentansprüche**

1. Modulares Fernsprechvermittlungsamt mit mehreren autonomen Selbstwähleinschüben, die je insbesondere Teilnehmerkreise, Anschlußkreise in Niederfrequenz und PCM, einen Teil des Verteilten Vermittlungsnetzes, eine Steuereinheit und eine Signalisationseinheit enthalten, dadurch gekennzeichnet, daß die Einschübe in mehrere Gruppen (12, 13, 14, 15) eingeteilt sind, die je eine beliebige Anzahl von Einschüben (B1 bis Bm bzw. B1 bis Bn, bzw. B1 bis Bp bzw. B1 bis Bq) umfassen, daß in jeder Gruppe ein Teil (10) eines Einschubs, Signalisations- und Sprachdurchschaltungseinschub genannt (B1), dem Austausch von Signalisation und Sprache mit den Einschüben der anderen Gruppen gewidmet ist, und daß alle Signalisations- und Sprachdurchschaltungseinschübe untereinander über bidirektionale PCM-Verbindungen von Punkt zu Punkt verbunden sind.

2. Fernsprechvermittlungsamt nach Anspruch 1, dadurch gekennzeichnet, daß der dem Austausch von Signalisation und Sprache gewidmete Teil ein Signalisations- und Sprachumschaltungsblock (53) ist, der die Stelle eines Blocks von Teilnehmerkreisen und/oder Anschlußkreisen einnimmt.

3. Fernsprechervermittlungsamt nach Anspruch 2, dadurch gekennzeichnet, daß der Sprach- und Signalisationsumschaltblock mit demselben Verbinder und derselben Verbindung zwischen diesem Verbinder und dem Vermittlungsnetz des betreffenden Einschubs zusammenwirkt, wie die, die für den Teilnehmerkreisblock und/oder den Anschlußkreisblock vorgesehen sind.

4. Fernsprechvermittlungsamt nach einem der Ansprüche 2 oder 3, dadurch gekennzeichnet, daß der Signalisations- und Sprachdurchschaltungsblock einen Signalisationsumschaltkreis (25), zwei Signalisationsspeicherschnittstellen (26, 27) und mindestens eine Verbindungsmatrix (39) enthält, die von einem Markierer (42) und einem an sich bekannten logischen Selektionsmodul (43) gesteuert wird.

5. Fernsprechvermittlungsamt nach Anspruch 4, dadurch gekennzeichnet, daß der Signalisationsumschaltkreis einen digitalen Rechner (62) und Daten- und Programmspeicher (63) enthält und daß die Signalisationsspeicherschnittstellen gemeinsam einen digitalen Rechner (65) und Programmdaten- und Pufferspeicher (66) sowie jeweils eine logischen Sendekreis (64) und einen logischen Empfangskreis (67) aufweisen.

6. Fernsprechvermittlungsamt nach Anspruch 5, dadurch gekennzeichnet, daß das Verarbeitungsmaterial (25 bis 27) des Signalisationsumschaltblocks gleich dem des Blocks mit der Verarbeitungseinheit (22, 23, bzw. 24) ist, wobei nur ihre Software sich voneinander unterscheidet.

7. Fernsprechvermittlungsamt nach einem beliebigen der vorhergehenden Ansprüche, dadurch gekennzeichnet, daß in jeder Gruppe der Signalisationsaustausch zwischen den Einschüben in einem bestimmten Zeitintervall der PCM-Anschlüsse erfolgt, die von Punkt zu Punkt die verschiedenen Einschübe dieser Gruppe miteinander verbinden, und daß der Signalisationsaustausch zwischen Einschüben unterschiedlicher Gruppen stets über den Signalisations- und Sprachumschaltblock des Signalisationsumschalteinschubs jeder der betroffenen Gruppen erfolgt, und zwar in einem anderen vorgegebenen Zeitintervall.

8. Fernsprechvermittlungsamt nach einem beliebigen der Ansprüche 4 bis 7, dadurch gekennzeichnet, daß die Verbindungsmatrix (39) zwei symmetrische Zeitschaltmatrizen (48, 49) aufweist, die von einem an sich bekannten logischen Selektionsmodul (50) gesteuert werden, wobei die Eingänge der ersten Matrix (48) und die Ausgänge der zweiten Matrix (49) über an sich bekannte Synchronisationskreise ($51^0$ bis $51^7$) mit den Verbindungsnetzen aller Einschübe der gleichen Gruppe verbunden sind, während die Ausgänge der ersten Matrix und die Eingänge der zweiten Matrix über an sich bekannte Synchronisationskreise ($52^0$ bis $52^7$) an Eingänge bzw. Ausgänge der entsprechenden Verbindungsmatrizen der anderen Gruppen angeschlossen sind.

9. Fernsprechvermittlungsamt nach einem beliebigen der vorhergehenden Ansprüche, dadurch gekennzeichnet, daß jede Gruppe in einem Einschub (B4) mit Ausnahme des erwähnten Signalisations- und Sprachumschalteinschubs einen zweiten mit den ersten identischen Signalisations- und Sprachumschaltblock besitzt, der mit dem ersten genauso verbunden ist, als gehöre er zu einer anderen Gruppe (Ausgang 46 und Eingang 47), wobei alle zweiten Blöcke untereinander von Punkt zu Punkt über bidirektionale PCM-Verbindungen verbunden sind.

10. Fernsprechermittlungsamt nach einem beliebigen der vorhergehenden Ansprüche, mit höchstens acht Gruppen von je acht Einschüben, wobei die Verarbeitungseinheit (22) höchstens sechzehn Signalkanäle verarbeiten kann und acht dieser sechzehn Kanäle für den Signalisationsaustausch zwischen den Einschüben verwendet werden, dadurch gekennzeichnet, daß diese Verarbeitungseinheit mit der außenwelt über mindestens einen der acht restlichen Signalkante in Dialog treten kann.

**Claims**

1. A modular telephone exchange central comprising a plurality of autonomous autoexchange bays, each particularly comprising subscriber circuits, low frequency and PCM junctors, a part of the distributed connection network, a control unit and a signalisation unit, characterized in that these bays are arranged in several groups (12, 13, 14, 15) each comprising any number of bays (B1 to Bm, B1 to Bn, B1 to Bp, B1 to Bq respectively), that in each group, a portion (10) of one bay called signalisation and speech commutation bay (B1 is attributed to the signalisation and speech exchanges with the bays of the other groups and that all the signalisation and speech commutation bays are interconnected from point to point by bidirectional PCM junctions.

2. A telephone exchange central according to claim 1, characterized in that said portion attributed to the signalisation and speech exchanges is a signalisation and speech commutation unit (53) disposed at the location of a unit of subscriber circuits and/or of junctors.

3. A telephone exchange central according to claim 2, characterized in that the speech and signalisation commutation unit cooperates with the same connector and the same junction between said connector and the connection network of the respective bay as those provided for the subscriber circuit and/or junctor unit.

4. A telephone exchange central according to one of claims 2 or 3, characterized in that the signalisation and speech commutation unit comprises a signalisation commutation circuit (25), two signalisation storing interfaces (26, 27) and at least one connection matrix (39) controlled by a marker (42) and a logic selection module (43) known per se.

5. A telephone exchange central according to claim 4, characterized in that the signalisation commutation circuit comprises a digital computer (62) and data and program memories (63), and that the signalisation storing interfaces comprise in common a digital computer (65) and program data and buffer memories (66) and comprise respectively a logic transmission circuit (64) and a logic reception circuit (67).

6. A telephone exchange central according to claim 5, characterized in that the processing material (25 to 27) of the signalisation commutation unit is identical to the processing material of the processing unit (22 to 24) respectively, only the software being different.

7. A telephone exchange central according to any one of the preceding claims, characterized in that in each group, the signalisation exchanges between bays are performed on a predetermined time interval of the PCM junctions connecting from point to point the different bays of this group, and that the signalisation exchanges between bays of different groups all transit via the signalisation and speech communication unit of the signalisation commutation bay of each of the concerned groups and are performed on another predetermined time interval.

8. A telephone exchange central according to any one of claims 4 to 7, characterized in that the connection matrix (39) includes two symmetrical time matrices (48, 49) controlled by a logic selection module (50) known per se, the inputs of the first matrix (48) and the output of the second matrix (49) being connected, via synchronization circuits ($51^0$ to $51^7$), known per se, to the connection networks of all bays of the same group, and the output of the first matrix and the inputs of the second matrix being connected, via synchronization circuits ($52^0$ to $52^7$), known per se, to inputs and outputs respectively of corresponding connection matrices of the other groups.

9. A telephone exchange central according to any one of the preceding claims, characterized in that each group comprises, in another bay (B4) than the signalisation and speech commutation bay cited above, a second signalisation and speed commutation unit identical to the first one, this second unit being connected to the first one as if it belonged to a different group (output 46 and input 47), all the second units being interconnected from point to point by bidirectional PCM junctions.

10. A telephone exchange central according to any one of the preceding claims, comprising, at most eight groups of eight bays each and in which the processing unit (22) is able to process at most sixteen semaphore channels, eight of these sixteen channels being used for the signalisation exchanges between the bays, characterized in that said processing unit is able to intercommunicate with the outside via at least one of the eight remaining semaphore channels.

Fig.1

Fig. 2

Fig.3

Fig.4

4

Fig.5

Fig.6

Fig.7